# EUROPEAN PATENT SPECIFICATION

(11) **EP 3 624 026 B1**
(45) Date of publication and mention of the grant of the patent: **02.08.2023**
(21) Application number: 19194888.4
(22) Date of filing: 02.09.2019
(51) Int. Cl.: G06Q 10/06, G06Q 50/04

(54) **SYSTEMS AND METHODS FOR DECENTRALIZED MANUFACTURING PRODUCTION PLANNING AND CONTROL**
SYSTEME UND VERFAHREN ZUR DEZENTRALEN PRODUKTIONSPLANUNG UND -STEUERUNG IN DER FERTIGUNG
SYSTÈMES ET PROCÉDÉS DE PLANIFICATION ET DE CONTRÔLE DÉCENTRALISÉS DE PRODUCTION MANUFACTURIÈRE

(30) Priority: 11.09.2018 EP 18193699
(43) Date of publication of application: 18.03.2020
(73) Proprietor: The Procter & Gamble Company, Cincinnati, OH 45202 (US)
(72) Inventor: BERTIN, Jeremy Georges, 53881 Euskirchen (DE)
(74) Representative: P&G Patent Germany

(56) References cited:
- WO-A1-2018/119085

## Description

### FIELD OF THE INVENTION

The present disclosure relates to systems and methods for supply chain management, and more particularly, systems and methods for end-to-end supply chain management and control of endpoint nodes using a distributed ledger.

### BACKGROUND OF THE INVENTION

Manufacturing processes are becoming increasing complex. Within the context of manufacturing absorbent articles, for example, various components, such as films, fibrous webs, absorbent materials, and tapes may need to be sourced from different suppliers. Furthermore, the manufacturing process may utilize a variety of different machines, each of which may be used for different product runs at different times. Distribution of the fully formed goods may also include a number of different distributors, shippers, warehouses, and other entities in the supply chain. Therefore there is a need for systems and methods for tracking and automating various aspects of complex supply chains across numerous endpoints. WO 2018/119085 A1 relates to implementing a historical data record of an additive manufacturing process with verification and validation capabilities that may be integrated into additive manufacturing devices.

### SUMMARY OF THE INVENTION

In one form, a method of controlling manufacturing processes on a decentralized industrial control network is defined in claim 1.

### BRIEF DESCRIPTION OF THE DRAWINGS

FIG. 1 depicts an example system for decentralized industrial control for production planning in accordance with non-limiting embodiment.
FIG. 2 depicts another example system for decentralized industrial control for production planning in accordance with non-limiting embodiment.
FIG. 3 schematically depicts the formation of a blockchain on a distributed ledger in accordance with the present disclosure.

### DETAILED DESCRIPTION OF THE INVENTION

The present disclosure relates to systems and processes for coordinating the manufacturing of articles utilizing blockchain technology operating on a decentralized industrial control network.

For illustration purposes, the present disclosure will be described in the context of manufacturing absorbent articles, although this disclosure is not so limited. It is to be appreciated that upon consideration of the present disclosure, the systems and methods described herein are applicable across a variety of different manufacturing segments beyond consumer product goods, such as automotive, apparel, electronics, pharmaceuticals, and so forth. As described in more detail below, blockchain-based technology may utilize autonomous manufacturing equipment that is configured to await instructions, perform certain tasks, and then provide data into a distributed ledger upon completion of a task or a process. Additionally, beyond the manufacturing equipment, other entities, systems, or controllers, such as material suppliers, distribution facilities, shipping entities, among others, can participate in the process described herein such that end-to-end supply chain management is provided through blockchain-based technology operating on a decentralized industrial control network.

The systems and methods described herein utilize smart contracts to assist with the industrial control techniques described herein and to allow for manufacturers or other stakeholders to address the complexities of the manufacturing process. A smart contract is generally self-executing code, or a set of rules, that adds layers of information, management, and control onto the manufacturing transactions being executed on a blockchain. The use of smart contracts can, therefore, allow for more complex industrial control and autonomy throughout the manufacturing ecosystem. For instance, a wide variety of parameters and information based on substantially real-time information can be utilized throughout the manufacturing process. Examples of parameters or real-time information that can be utilized in accordance with the present disclosure include, without limitation, financial forecasts, demand forecasts, material supply levels, inventory supply levels, weather patterns, production capacity, warehouse capacity, transportation capacity, traffic patterns, and currency fluctuations, among other inputs or considerations. Thus, industrial equipment operations and processes can be governed by decentralized business logic that is riding on a distributed ledger. Using this approach, high level production planning can be coordinated based on a variety of criteria across the supply chain. In some cases, using the supply chain governance techniques described herein, global production optimums can be achieved.

The use of a distributed ledger is implemented as a blockchain database. A blockchain database is generally a database that is shared among a plurality of nodes constituting a decentralized industrial control network, wherein each node can directly access (e.g., read or write) the database. The blockchain database can be distributed among the nodes rather than being administered by a single entity. Each node in the network can manage its respective copy of the ledger independently, but in effect the ledger can be identically replicated across the network because changes to the ledger can be made in a coordinated manner across the decentralized industrial control network. When a node "sends a transaction" to a blockchain database, it can access the database in accordance with an action specified in the transaction, e.g. it can write data and/or run a program stored in the blockchain.

Transactions recorded in a blockchain database can be grouped into "blocks," which are, after validation via a consensus algorithm, chained together over time to form a "blockchain." The blocks are said to form a "chain" because each block can contain a reference to the previous block. For example, each block can include a timestamp that identifies when a previous block has been added to the chain. In some implementations, every block in the chain can contain a hash of the previous block in the chain. This has the effect of creating a chain of blocks from the first block initially created to the current block. Each block is guaranteed to come after the previous block chronologically because the previous block's hash would otherwise not be known.

In some implementations, nodes in the decentralized industrial control network that maintain the distributed ledger validate a block of transactions that is to be added to the blockchain by reaching at least a threshold consensus among the nodes that (i) a digital signature associated with the block is valid and (ii) the block (or transactions within the block) complies with one or more additional validation rules. Each computing node in the network (or a subset of the nodes that are tasked with maintaining the distributed ledger) can independently validate a block of transactions. Independent validation can ensure that no individual node acts dishonestly to alter the ledger in an illegitimate manner. Further, in some implementations, each node in the decentralized industrial control network can be associated with an identifier (i.e., address) and be provided with a cryptographic private key/public key pair. All the nodes in the decentralized industrial control network can have a list of the public keys and the respective identifiers of the other nodes. In some implementations, the identifier for a node can be its public key such that transactions involving a given node are addressed using the node's public key.

When a node sends a transaction (e.g., any record to be recorded) to the blockchain database, the node can sign the transaction with its private key. The transaction can then be broadcast to the other nodes, wherein each communication from a node uses the node's identifier. The other nodes can then use the public key associated with the identifier to verify the digital signature so as to authenticate the source of the communication and confirm that the communication has not been tampered with. The other nodes can also check that the transaction complies with any additional rules required to validate a transaction or block of transactions, such as by the use of smart contracts.

In some implementations, the distributed ledger can employ a permissioned blockchain. A permissioned blockchain database is a blockchain database in which transaction processing is performed by nodes associated with known identities. In other words, the identity of the users of the nodes can be whitelisted (or blacklisted). Similarly, the blockchain database can be private, meaning that access to the blockchain database data can be limited, e.g. only to certain signature authorities or end user devices.

The ledger (blockchain database) stores not only transactional records, but also files comprising a combination of data and executable computer programs. To this end, the blockchain database is provided with a Turing-complete programming language. In some implementations, a permissioned blockchain can enable the stipulation of trusted agreements between different nodes in the network, since at least pseudonyms of the nodes are known. The conditions of these agreements can be stored in the blockchain database and, since they reside in the blockchain database, the conditions are transparent, i.e. they cannot be covertly modified by one of the parties. In some implementations, the programs, when executed, automatically cause performance of one or more aspects of a transaction. These programs are sometimes referred to as "smart contracts."

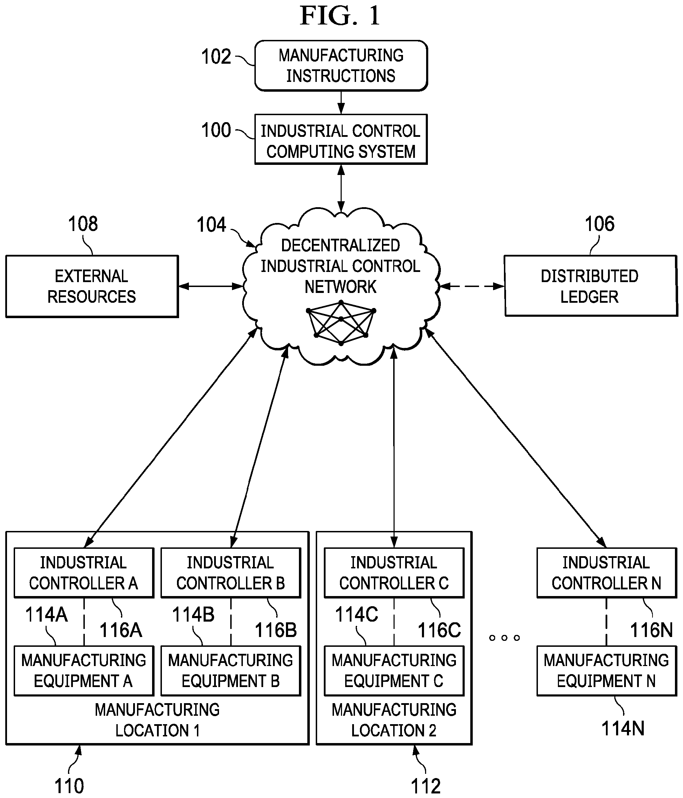

FIG. 1 depicts an example system for decentralized industrial control for production planning in accordance with non-limiting embodiment. The system can include endpoints, nodes, or other participants across a variety of locations and having different roles in the manufacturing process. As described in more detail below, the endpoints can communicate with a decentralized industrial control network 104, such that the endpoints are participating in a manufacturing/production planning blockchain.

In the illustrated configuration, manufacturing instructions 102 can be provided or otherwise submitted to an industrial control computing system 100. The manufacturing instructions 102 can be provided using any suitable technique, such as a through a user interacting with an interface. In some implementations, the manufacturing instructions 102 can be provided by another computing system or data source that is in electrical communication with the industrial control computing system 100. The content or scope of the manufacturing instructions 102 can vary based on, for example, the products being manufactured or produced. In some implementations, the products are identified by a stock keeping unit (SKU) or other type of product or part identifier. The manufacturing instructions 102 can also include, for example, quantity, order number, customer information, product features, configurations, and so forth.

The manufacturing instructions 102 can be sent into the decentralized industrial control network 104 in order to begin production of the product. The decentralized industrial control network 104 can be a private network that is only accessible to certain endpoints. This arrangement can be considered a private or permissioned blockchain network. In order to allow participation by third party entities, such as external resources 108, the decentralized industrial control network 104 can be a semi-private network with crytopgraphic keys provided to the external resources 108. This arrangement can be considered a consortium or semi-private blockchain network. The external resources 108 can include, for example, suppliers, vendors, shipping services, among other resources, services, or entities that support or are otherwise involved with the manufacturing of the products identified in the manufacturing instructions 102.

Various forms of manufacturing equipment can be in communication with the decentralized industrial control network 104. In some configurations, industrial controllers are utilized to interface the manufacturing equipment to the decentralized industrial control network 104. FIG. 1 schematically depicts manufacturing equipment 114A-*N,* with each manufacturing equipment having an associated industrial controller 116A-*N*. As depicted, the manufacturing equipment can be within the same facility, such as manufacturing equipment 114A and manufacturing equipment 114B that are schematically shown to be positioned within manufacturing location 110 (i.e., manufacturing location 1). Manufacturing equipment 114C is schematically shown to be positioned within manufacturing location 112 (i.e., manufacturing location 2). As is to be appreciated, the manufacturing equipment 114A-*N* can each provide certain production functionality or services.

The industrial controllers 116A-*N* can be any suitable hardware/software device that can interface with one or more decentralized industrial control networks 104 on behalf of one or more of the associated manufacturing equipment 114A-*N*. In accordance with the present disclosure, the industrial controllers 116A-*N* can generally perform various roles that a user may traditionally perform in conventional production planning and manufacturing processes. As such, the industrial controllers 116A-*N* and the associated manufacturing equipment 114A-*N* can autonomously participate in the manufacturing process.

In some configurations, one or more of the industrial controllers 116A-*N* includes a programmable logic controller (PLC). In some configurations, one or more of the industrial controllers 116A-*N* can include or be considered edge computers or edge computing devices, and in some cases, can implement fog networking or fog computing architecture. In some configurations, one or more of the industrial controllers 116A-*N* includes an industrial programmable computer (IPC). Further, each of the industrial controllers 116A-*N* can either be a client or a miner with regard to its interaction with the decentralized industrial control network 104.

As schematically shown in FIG. 1, a distributed ledger 106 can be utilized by the decentralized industrial control network 104. For implementations based in blockchain-based technologies, the distributed ledger 106 can have a consensus mechanism, such as a Proof of Work (POW) protocol, a Proof of Stake (POS) protocol, or a Practical Byzantine Fault Tolerance (PBFT) mechanism, for example. The distributed ledger 106 can further utilize a peer-to-peer communication protocol. Finally, in accordance with blockchain functionality utilized by the presently disclosed systems and methods, the distributed ledger 106 can utilize a crytopgraphic infrastructure utilizing public keys and private keys. Blocks in the blockchain that are stored in the distributed ledger 106 can be linked to the predecessor block via hashing.

The industrial controllers 116A-*N* can monitor the distributed ledger 106 and await manufacturing instruction. Additionally, in implementations utilizing external resources 108, such resources can also monitor the distributed ledger 106 and provide input to the ledger, as may be necessary. For instance, the manufacturing instructions 102 can call for the production of a certain quantity of goods that require initial processing by the manufacturing equipment 114A and then final processing by manufacturing equipment 114B. Upon detection of the manufacturing instructions 102 by the industrial controller 116A, initial processing of the product can be performed by manufacturing equipment 114A. In some cases, prior to the initial processing of the product by manufacturing equipment 114A, materials can be automatically ordered or otherwise sourced from one of the external sources 108 based on the manufacturing instructions 102. Once the initial processing of the product has been completed by the manufacturing equipment 114A, the industrial controller 116A can automatically and autonomously update the distributed ledger 106. At that point, the industrial controller 116B can instruct the manufacturing equipment 114B to perform final processing on the product. Once the final processing of the product has been completed by the manufacturing equipment 114B, the industrial controller 116B can automatically and autonomously update the distributed ledger 106.

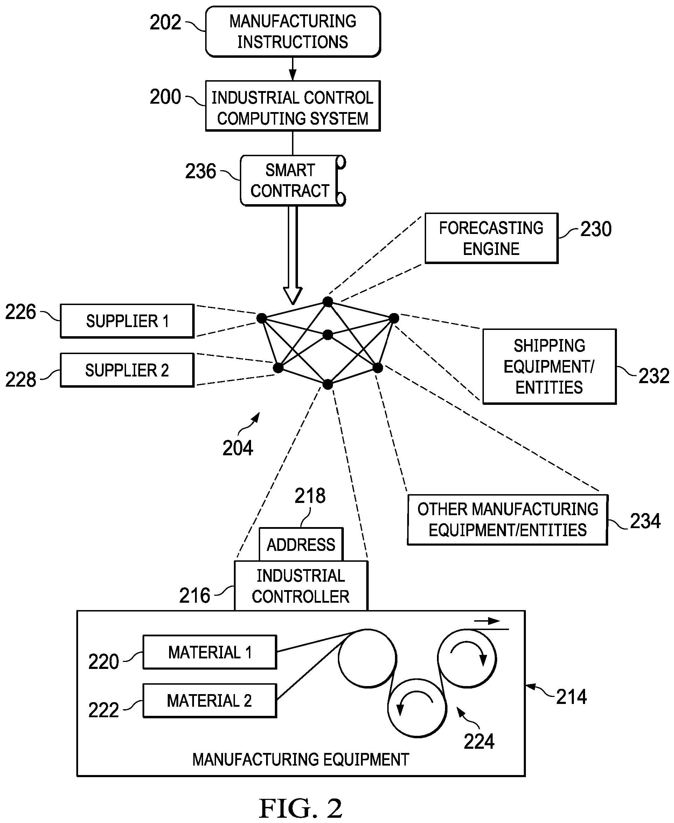

FIG. 2 depicts another example system for decentralized industrial control for production planning in accordance with another non-limiting embodiment. Similar to FIG. 1, the system can include endpoints, nodes, or other participants across a variety of locations and having different roles in the manufacturing process. FIG. 2 depicts full end-to-end supply chain integration, with a number of different entities in communication with a decentralized industrial control network 204. For illustration purposes, a plurality of suppliers are shown (suppliers 226, 228), along with shipping equipment/entities 232 and other manufacturing equipment/entities 234. Additionally, a forecasting engine 230 is shown that schematically depicts the ability to autonomously utilize various forms of forecasting, such as inventory forecasting, supply/demand forecasting, and/or financial forecasting, in the production planning techniques described herein. Finally, manufacturing equipment 214 is depicted, which utilizes a plurality of materials (materials 220, 222) during its manufacturing process. Similar to FIG. 1, the manufacturing equipment 214 can be associated with an industrial controller 216 that is configured to communicate with the decentralized industrial control network 204. An address 218 is associated with the industrial controller 216 that allows the industrial controller 216 and the manufacturing equipment 214 to sit on the decentralized industrial control network 204.

Manufacturing instructions 202 can be provided to an industrial control computing system 200. The industrial control computing system 200 can generate a smart contract 236 that is provided to the decentralized industrial control network 204. The smart contract 236 can include a series of rules or other directives associated with the manufacturing instructions 202.

The smart contract 236 is Turing-complete, as described above. T smart contract 236 can coordinate various aspects of the manufacturing process, such as material order, payments to various entities, shipping logistics, manufacturing logistics, and so forth. The smart contract 326 can be a stateless smart contract or a state-based smart contract.

The smart contract 236 coordinates the production of goods using the manufacturing equipment 214. Based on the manufacturing instructions 202, a quantity of materials 220, 222 is acquired from suppliers 226, 228 and provided to the production facility. Payment can be automatically tendered to each of the suppliers 226, 228. The materials 220, 222 are processed by a converter 224 of the manufacturing equipment 214 based on the product parameters supplied in the smart contract 236. The smart contract 236 can coordinate actions of other manufacturing equipment/entities 234, shipping equipment/entities 232, and forecasting engines 230, as may be necessary.

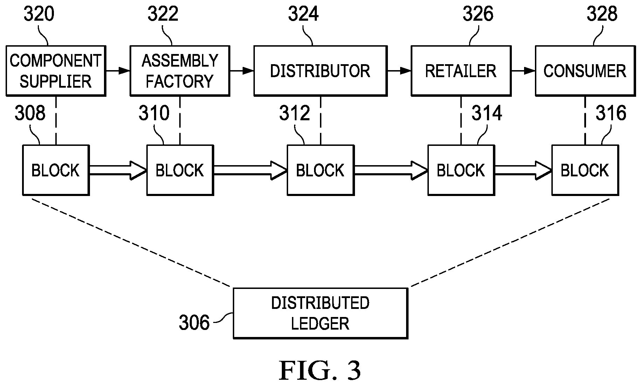

FIG. 3 schematically depicts the formation of a blockchain on a distributed ledger 306 in accordance with the present disclosure. Transactions of a manufacturing process can be recorded into distributed ledger 306 as blocks 308, 310 312, 314, 316 which are, after validation via a consensus algorithm, chained together over time to form a blockchain. For illustration purposes, an end-to-end production cycle is schematically depicted. First a component supplier's 320 participation in the process is immutably documented at block 308. The scope and content of the block 308 can vary, but can include, for instance, lot numbers of the material supplied, quantity of material supplied, price, and so forth. Next, an assembly factory's 322 participation in the process is immutably documented at block 310. The assembly factory 322 can store information in the block 310 pertaining to which machines were utilized, amount of goods produced, production parameters, and so forth. Next, a distributor's 324 participation in the process is immutably documented at block 312. The distributor 324 can store information into block 312 related to amount of products received, destination of the products, and so forth. Next, a retailer's 326 participation in the process is immutably documented at block 314. The retailer 326 can store information into block 314 related to amount of products received, pricing information, inventory related information, and so forth. Finally, a consumer's 328 participation in the process is immutably documented at block 316. Information related to the date of purchase, amount of product purchased, and so forth can be stored in block 316.

The dimensions and values disclosed herein are not to be understood as being strictly limited to the exact numerical values recited. Instead, unless otherwise specified, each such dimension is intended to mean both the recited value and a functionally equivalent range surrounding that value. For example, a dimension disclosed as "40 mm" is intended to mean "about 40 mm."

## Claims

1. A method of controlling manufacturing processes on a decentralized industrial control network (104), comprising:
receiving, by an industrial control computing system (100), manufacturing instructions (102) for a manufactured product;
generating, by the industrial control computing system (100), a smart contract (236) for deployment on a distributed ledger (106), wherein the smart contract (236) is based on the manufacturing instructions (102) and comprises an address corresponding to manufacturing equipment (214) on the decentralized industrial control network (104), wherein the smart contract (236) comprises self-executing business logic and the smart contract (236) coordinates the production of goods using the manufacturing equipment (214);
deploying, by the industrial control computing system (100), the smart contract (236) onto the distributed ledger (106);
receiving, by an industrial controller (116A-N) associated with the industrial manufacturing equipment (214), operational instructions based on the smart contract (236);
acquiring a quantity of materials (220, 222) from suppliers (226, 228) based on manufacturing instructions (202);
processing the materials (220, 222) by a converter (224) of the manufacturing equipment (214) based on product parameters supplied in the smart contract (236);
subsequent to an automatic execution of a manufacturing task, transmitting, by the industrial controller (116A-N) associated with the industrial manufacturing equipment (214), an immutable notification to the distributed ledger (106) regarding the execution of the manufacturing task; and
upon completion of each of the plurality of operational requirements, discarding the address corresponding to the industrial manufacturing equipment (214); and wherein the distributed ledger (106) is a blockchain network and wherein the ledger (106) stores transactional records, and also files comprising a combination of data and executable computer programs, and wherein the blockchain database is provided with a Turing-complete programming language.

2. The method of claim 1, wherein the industrial controller (116A-N) associated with the industrial manufacturing equipment is any of a programmable logic controller (PLC), an edge computing processor, and an industrial programmable computer (IPC).

3. The method of any of the previous claims, wherein the manufacturing equipment executing the manufacturing task is autonomous.

4. The method of any of the previous claims, further comprising:
transmitting, by the industrial controller (116A-N) associated with the industrial manufacturing equipment, production data into the distributed ledger (106).

5. The method of claim 4, wherein the production data is immutably stored in the distributed ledger (106).

6. The method of claim 5, wherein the production data comprises any of fault data, alarm data, and warning data.

7. The method of any of the previous claims, wherein the smart contract (236) is based on the manufacturing instructions (202) and comprises a plurality of addresses that each corresponds to respective industrial manufacturing equipment, wherein each respective industrial manufacturing equipment is associated with an address associated with an industrial controller.

8. The method of claim 7, wherein each industrial controller is configured to receive information from the distributed ledger (106) and store information on the distributed ledger (106).

9. The method of any of the previous claims, wherein the smart contract is a stateless smart contract.

10. The method of any of the previous claims, wherein the smart contract is a state-based smart contract.

11. The method of claim 10, wherein the manufacturing instructions of the state-based smart contract comprises sequential manufacturing processes.

12. The method of claim 10, wherein the smart contract is Turing-complete.

13. The method of claim 10, wherein the smart contract comprises a plurality of operational requirements.

14. The method of any of the previous claims, wherein the industrial controller (116A-N) is a miner device.

## Patentansprüche

1. Verfahren zum Steuern von Herstellungsprozessen auf einem dezentralen industriellen Steuernetzwerk (104), umfassend:
Empfangen, durch ein industrielles Steuerungsrechnersystem (100), von Herstellungsanweisungen (102) für ein hergestelltes Produkt;
Erzeugen, durch das industrielle Steuerungsrechnersystem (100), eines Smart Contracts (236) für einen Einsatz auf einem Distributed Ledger (106), wobei der Smart Contract (236) auf den Herstellungsanweisungen (102) basiert und eine Adresse, die der Herstellungsausrüstung (214) auf dem dezentralen industriellen Steuernetzwerk (104) entspricht, umfasst, wobei der Smart Contract (236) eine selbstausführende Geschäftslogik umfasst und der Smart Contract (236) die Produktion von Waren unter Verwendung der Herstellungsausrüstung (214) koordiniert;
Einsetzen, durch das industrielle Steuerungsrechnersystem (100), des Smart Contracts (236) auf den Distributed Ledger (106);
Empfangen, durch eine industrielle Steuerung (116A-N), die der industriellen Herstellungsausrüstung (214) zugeordnet ist, von Betriebsanweisungen basierend auf dem Smart Contract (236);
Erfassen einer Menge von Materialien (220, 222) von den Lieferanten (226, 228) basierend auf Herstellungsanweisungen (202);
Verarbeiten der Materialien (220, 222) durch einen Umsetzer (224) der Herstellungsausrüstung (214) basierend auf Produktparametern, die in dem Smart Contract (236) geliefert werden;
folgend einer automatischen Ausführung einer Herstellungsaufgabe, Übertragen, durch die industrielle Steuerung (116A-N), die der industriellen Herstellungsausrüstung (214) zugeordnet ist, einer unveränderbaren Benachrichtigung an den Distributed Ledger (106) bezüglich der Ausführung der Herstellungsaufgabe; und
nach einem Abschluss jeder der Vielzahl von betrieblichen Anforderungen, Verwerfen der Adresse, die der industriellen Herstellungsausrüstung (214) entspricht; und wobei der Distributed Ledger (106) ein Blockchain-Netzwerk ist und wobei der Ledger (106) Transaktionsdatensätze speichert, und ebenso Dateien, umfassend eine Kombination von Daten und ausführbaren Computerprogrammen, und wobei die Blockchain-Datenbank mit einer Turingvollständigen Programmiersprache versehen ist.

2. Verfahren nach Anspruch 1, wobei die industrielle Steuerung (116A-N), die der industriellen Herstellungsausrüstung zugeordnet ist, ein beliebiges von einer speicherprogrammierbaren Steuerung (PLC), einem Edge-Computing-Prozessor und einem industriellen programmierbaren Computer (IPC) ist.

3. Verfahren nach einem der vorstehenden Ansprüche, wobei die Herstellungsausrüstung, die die Herstellungsaufgabe ausführt, autonom ist.

4. Verfahren nach einem der vorstehenden Ansprüche, ferner umfassend:
Übertragen, durch die industrielle Steuerung (116A-N), die der industriellen Herstellungsausrüstung zugeordnet ist, von Produktionsdaten in den Distributed Ledger (106).

5. Verfahren nach Anspruch 4, wobei die Produktionsdaten in dem Distributed Ledger (106) unveränderlich gespeichert sind.

6. Verfahren nach Anspruch 5, wobei die Produktionsdaten ein beliebiges von Fehlerdaten, Alarmdaten und Warndaten umfassen.

7. Verfahren nach einem der vorstehenden Ansprüche, wobei der Smart Contract (236) auf den Herstellungsanweisungen (202) basiert und eine Vielzahl von Adressen, die jeweils der jeweiligen industriellen Herstellungsausrüstung entsprechen, umfasst, wobei jede jeweilige industrielle Herstellungsausrüstung mit einer Adresse zugeordnet ist, die einer industriellen Steuerung zugeordnet ist.

8. Verfahren nach Anspruch 7, wobei jede industrielle Steuerung konfiguriert ist, um Informationen von dem Distributed Ledger (106) zu empfangen und Informationen auf dem Distributed Ledger (106) zu speichern.

9. Verfahren nach einem der vorstehenden Ansprüche, wobei der Smart Contract ein zustandsloser Smart Contract ist.

10. Verfahren nach einem der vorstehenden Ansprüche, wobei der Smart Contract ein zustandsbasierter Smart Contract ist.

11. Verfahren nach Anspruch 10, wobei die Herstellungsanweisungen des zustandsbasierten Smart Contracts sequenzielle Herstellungsprozesse umfassen.

12. Verfahren nach Anspruch 10, wobei der Smart Contract Turing-vollständig ist.

13. Verfahren nach Anspruch 10, wobei der Smart Contract eine Vielzahl von Betriebsanforderungen umfasst.

14. Verfahren nach einem der vorstehenden Ansprüche, wobei die industrielle Steuerung (116A-N) eine Miner-Vorrichtung ist.

## Revendications

1. Procédé de commande de processus de fabrication sur un réseau de commande industriel décentralisé (104), comprenant :
la réception, par un système informatique de commande industriel (100), d'instructions de fabrication (102) pour un produit fabriqué ;
la génération, par le système informatique de commande industriel (100), d'un contrat intelligent (236) pour déploiement sur un grand livre distribué (106), le contrat intelligent (236) étant basé sur les instructions de fabrication (102) et comprenant une adresse correspondant à un équipement de fabrication (214) sur le réseau de commande industriel décentralisé (104), le contrat intelligent (236) comprenant une logique commerciale à auto-exécution et le contrat intelligent (236) coordonnant la production de biens à l'aide de l'équipement de fabrication (214) ;
le déploiement, par le système informatique de commande industriel (100), du contrat intelligent (236) sur le grand livre distribué (106) ;
la réception, par une unité de commande industrielle (116A-N) associée à l'équipement de fabrication industriel (214), d'instructions opérationnelles en fonction du contrat intelligent (236) ;
l'acquisition d'une quantité de matériaux (220, 222) auprès de fournisseurs (226, 228) en fonction d'instructions de fabrication (202) ;
le traitement des matériaux (220, 222) par un convertisseur (224) de l'équipement de fabrication (214) en fonction de paramètres de produit fournis dans le contrat intelligent (236) ;
à la suite d'une exécution automatique d'une tâche de fabrication, la transmission, par l'unité de commande industrielle (116A-N) associée à l'équipement de fabrication industriel (214), d'une notification immuable au grand livre distribué (106) concernant l'exécution de la tâche de fabrication ; et
à l'achèvement de chacune parmi la pluralité d'exigences opérationnelles, l'élimination de l'adresse correspondant à l'équipement de fabrication industriel (214) ; et dans lequel le grand livre distribué (106) est un réseau de chaîne de blocs et dans lequel le grand livre (106) stocke des enregistrements transactionnels, ainsi que des fichiers comprenant une combinaison de données et de programmes informatiques exécutables, et dans lequel la base de données de chaînes de blocs est pourvue d'un langage de programmation Turing-complet.

2. Procédé selon la revendication 1, dans lequel l'unité de commande industrielle (116A-N) associée à l'équipement de fabrication industriel est l'un quelconque parmi un automate programmable (PLC), un processeur d'edge computing, et un ordinateur programmable industriel (IPC).

3. Procédé selon l'une quelconque des revendications précédentes, dans lequel l'équipement de fabrication exécutant la tâche de fabrication est autonome.

4. Procédé selon l'une quelconque des revendications précédentes, comprenant en outre :
la transmission, par l'unité de commande industrielle (116A-N) associée à l'équipement de fabrication industriel, de données de production vers le grand livre distribué (106).

5. Procédé selon la revendication 4, dans lequel les données de production sont stockées de manière immuable dans le grand livre distribué (106).

6. Procédé selon la revendication 5, dans lequel les données de production comprennent l'une quelconque parmi des données de défaut, des données d'alarme, et des données d'avertissement.

7. Procédé selon l'une quelconque des revendications précédentes, dans lequel le contrat intelligent (236) est basé sur les instructions de fabrication (202) et comprend une pluralité d'adresses qui correspondent chacune à un équipement de fabrication industriel respectif, chaque équipement de fabrication industriel respectif étant associé à une adresse associée à une unité de commande industrielle.

8. Procédé selon la revendication 7, dans lequel chaque unité de commande industrielle est configurée pour recevoir des informations provenant du grand livre distribué (106) et stocker des informations sur le grand livre distribué (106).

9. Procédé selon l'une quelconque des revendications précédentes, dans lequel le contrat intelligent est un contrat intelligent sans état.

10. Procédé selon l'une quelconque des revendications précédentes, dans lequel le contrat intelligent est un contrat intelligent basé sur un état.

11. Procédé selon la revendication 10, dans lequel les instructions de fabrication du contrat intelligent basé sur un état comprennent des processus de fabrication séquentiels.

12. Procédé selon la revendication 10, dans lequel le contrat intelligent est Turing-complet.

13. Procédé selon la revendication 10, dans lequel le contrat intelligent comprend une pluralité d'exigences opérationnelles.

14. Procédé selon l'une quelconque des revendications précédentes, dans lequel l'unité de commande industrielle (116A-N) est un dispositif de minage.
